# EUROPEAN PATENT APPLICATION

(11) **EP 3 597 433 A1**
(43) Date of publication of application: **22.01.2020**
(21) Application number: 18767019.5
(22) Date of filing: 19.01.2018
(51) Int. Cl.: B41J 2/01, G06T 1/00

(54) **IMAGE DETECTION DEVICE AND INKJET RECORDING DEVICE**

(30) Priority: 16.03.2017 JP 2017050729
(71) Applicant: Konica Minolta, Inc., Tokyo 100-7015 (JP)
(72) Inventor: MIZUTANI, Toshiyuki, Tokyo 100-7015 (JP)
(74) Representative: Gille Hrabal
(86) International application number: PCT/JP2018/001522
(87) International publication number: WO 2018/168191

(57) **Abstract**

Provided are: an image detection device capable of detecting the position of an object to be detected, reliably and with sufficient accuracy; and an inkjet recording device. The present invention comprises an imaging means (26) and a detection means (40). The imaging means (26) has: a line sensor (265) that, by using a plurality of imaging elements (265a) arranged at element arrangement intervals in a prescribed direction, obtains detection values for the plurality of imaging elements one-dimensionally arranged in a prescribed direction on the surface of a recording medium; and an optical element (264) that diffuses incident light from within an ink droplet width being no more than twice the arrangement interval of the imaging elements, so as to guide the incident light to a range larger than twice the element arrangement interval, in a prescribed direction upon the plurality of imaging elements (265a). The detection means (40) performs position detection on the basis of the detection values for the imaging elements from the imaging elements (265a) having the incident light guided thereto from the image to be detected.

## Description

### Technical Field

The present invention relates to an image detection device and an inkjet recording device.

### Background Art

There have been inkjet recording devices that record an image by jetting ink from nozzles of a recording head and landing the ink onto a recording medium. With regard to such inkjet recording devices, there has been a technique for an image detection device that captures an image of a line or dot (hereinafter referred to as a detection target image) on the recording medium formed by jetting ink from a single nozzle and that detects the position of the detection target image based on the captured image data. By analyzing the position of the detection target image that is detected by the image detection device, it is possible to detect a defective nozzle such as a nozzle that does not jet ink or a nozzle that has an abnormality in the ink landing position (for example, see Patent Document 1).

As an imaging means that is provided in the image detection device to capture an image of a test image, it is possible to use a line sensor in which a plurality of imaging elements is arrayed to perform one-dimensional imaging in a predetermined direction. The line sensor of the imaging means captures an image of an imaging area that corresponds to the arrangement of the plurality of imaging elements, so as to obtain the light intensity (detection values) of a plurality of imaging pixels that is one-dimensionally arrayed over the imaging area.

In recent years, the definition of images recorded by inkjet recording devices has been improved, and it will incur a significant cost increase to use such a line sensor for an inkjet recording device that has sufficiently high imaging resolution compared to the recording resolution of the inkjet recording device. To avoid this, techniques of determining an approximation curve, a weighted average of the light intensity or the like are used in image detection devices to determine the position of a detection target image from the light intensity distribution of a plurality of imaging pixels including the detection target image at high precision compared to the imaging resolution while keeping the image resolution low.

### Citation List

### Patent Literature

Patent Document 1: JP 2015-058602A

### Summary of Invention

### Technical Problem

However, depending on the relationship between the width in the above-described predetermined direction of the detection target image and the imaging resolution of the line sensor, the number of imaging pixels that include the detection target image may sometimes become 2 or less. In such cases, even the above-described techniques are not effective enough to detect the position of the detection target image from the light intensity distribution of the imaging pixels with sufficiently high precision.

It is an object of the present invention to provide an image detection device and an inkjet recording device that can detect the position of a detection target image more reliably with sufficiently high precision.

### Solution to Problem

In order to achieve the above-described object, the invention of an image detection device recited in claim 1 is:
an image detection device for detecting a detection target image that is recorded on a recording medium by an ink droplet jetted from a nozzle onto the recording medium and that has a ink droplet width in the predetermined direction corresponding to a size of a single ink droplet landed on the recording medium, including:
   an imaging means that captures a surface of the recording medium one-dimensionally in the predetermined direction; and
   a detecting means that detects a position in the predetermined direction of the detection target image based on an image capture result of an area over both edges in the predetermined direction of the detection target image obtained by the imaging means,
wherein the imaging means includes:
   a line sensor that includes a plurality of imaging elements arranged at a predetermined element arrangement pitch in the predetermined direction and that detects incident light emitted from the surface of the recording medium with the plurality of imaging elements so as to obtain detection values of a plurality of imaging pixels one-dimensionally arrayed on the recording medium in the predetermined direction corresponding to the plurality of imaging elements; and
   an optical element that guides the incident emitted from the surface of the recording medium to the line sensor,
wherein the optical element diffuses the incident light such that incident light emitted from the ink droplet width of less than twice an arrangement pitch in the predetermined direction of the plurality of imaging pixels is guided to an area on the plurality of imaging elements of greater than twice the element arrangement pitch in the predetermined direction, and
wherein the detecting means detects the position based on detection values of imaging pixels corresponding to imaging elements to which the incident light emitted from the detection target image is guided.

The invention recited in claim 2 is the image detection device according to claim 1, wherein the optical element diffuses the incident light emitted from a point on the recording medium to a diffusion width in the predetermined direction of equal to or greater than the element arrangement pitch and guides the diffused light to the line sensor.

The invention recited in claim 3 is the image detection device according to claim 1 or 2, wherein the optical element diffuses the incident light only in the predetermined direction.

The invention recited in claim 4 is an image detection device according to any one of claims 1 to 3, wherein the optical element includes a birefringent plate that doubly refracts the incident light in the predetermined direction to separate the incident light into ordinary light and extraordinary light.

The invention recited in claim 5 is an image detection device according to claim 4, wherein the birefringent plate of the optical element includes a plurality of birefringent plates with different separation width in the predetermined direction between the ordinary light and the extraordinary light, and the plurality of birefringent plates is laminated together.

In order to achieve the above-described object, the invention of an inkjet recording device recited in claim 6 includes:
a recording means that jets the ink droplet from the nozzle;
a recordation controlling means that forces the recording means to j et ink from the nozzle onto the recording medium to record a recordation target image on the recording medium having the ink droplet width in the predetermined direction corresponding to the size of a single ink droplet landed on the recording medium; and
the image detection device according to any one of claims 1 to 5.

The invention recited in claim 7 is the inkjet recording device according to claim 6 further including:
a moving means that moves the recording medium, and/or the recording means and the imaging means relative to each other in a direction perpendicular to the predetermined direction,
wherein the recording means includes a plurality of the nozzle that is disposed over a predetermined recording width in the predetermined direction,
wherein the recordation controlling means records the detection target image by jetting ink droplets from a plurality of the nozzle onto the recording medium that is moved relative to the recording means by the moving means, and
wherein the imaging means captures the surface of the recording medium that is moved relative to the imaging means by the moving means.

### Advantageous Effects of Invention

With the present invention, it is possible to detect the position of a detection target image more reliably with sufficiently high precision.

### Brief Description of Drawings

FIG. 1 illustrates the schematic configuration of an inkjet recording device.
FIG. 2 is a schematic view of a head unit, illustrating the configuration thereof.
FIG. 3 is a block diagram of the inkjet recording device, illustrating the main functional configuration thereof.
FIG. 4 is a schematic cross-sectional view of an imaging unit, illustrating the configuration thereof.
FIG. 5 illustrates the relationship between an imaging area of the imaging unit and the arrangement area of imaging elements.
FIG. 6 illustrates the configuration of an OLPF.
FIG. 7A illustrates an example test image.
FIG. 7B illustrates an example test image.
FIG. 8 illustrates an operation of the imaging unit capturing a line in a test image.
FIG. 9 illustrates an example of detection values of imaging pixels when a line is captured at three or more imaging elements.
FIG. 10 is a flowchart illustrating the control steps of defective nozzle detection processing.
FIG. 11 is a flowchart illustrating the control steps of image recordation processing.

### Description of Embodiments

Hereinafter, an image detection device and an inkjet recording device according to an embodiment of the present invention will be described based on the drawings.

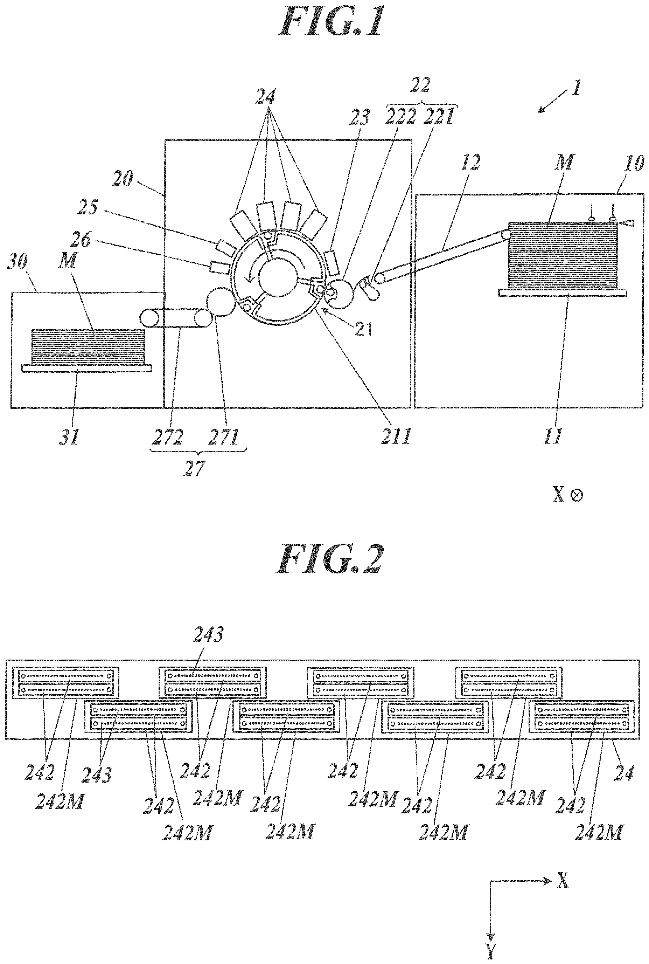

FIG. 1 illustrates an inkjet recording device 1 according to an embodiment of the present invention, illustrating the schematic configuration thereof.

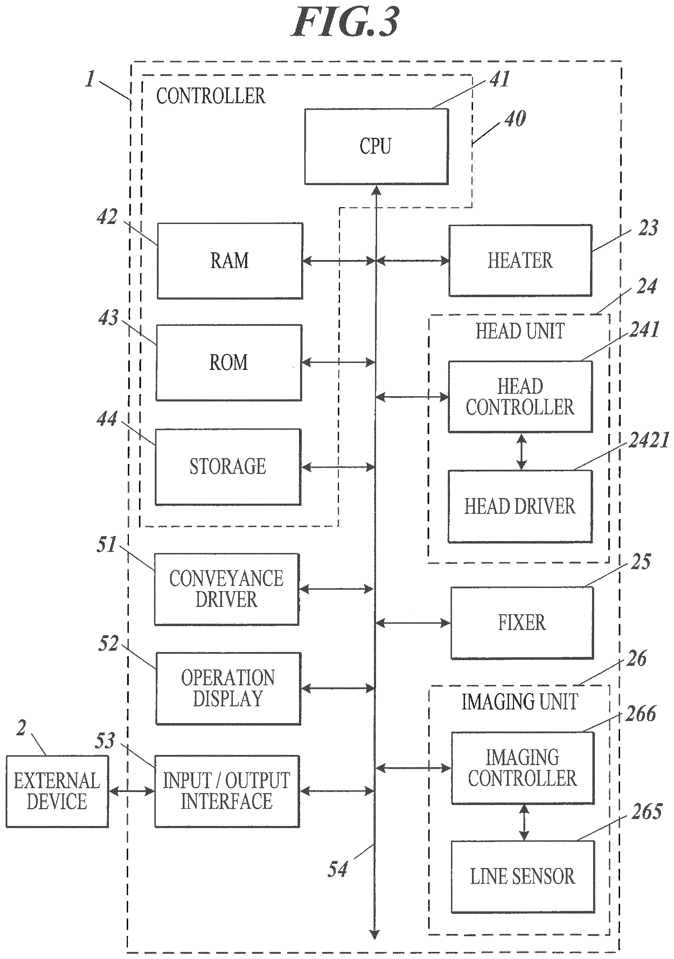

The inkjet recording device 1 includes a sheet feeder 10, an image recorder 20, a sheet ejector 30 and a controller 40 (FIG. 3). Under the control of the controller 40, the inkjet recording device 1 conveys a recording medium M stored in the sheet feeder 10 to the image recorder 20, records an image on the recording medium M at the image recorder 20 and conveys the recording medium M with the image to the sheet ejector 30. The recording medium M may be any of various media which can fix ink landed on the surface thereof such as fabric and sheet resin as well as papers including plain paper and coated paper. Further, the recording medium M is not limited to short media such as sheets but may be long media such as rolled paper that is fed by roll to roll.

The sheet feeder 10 includes a sheet feeding tray 11 that stores the recording medium M and a medium feeder 12 that conveys and feeds the recording medium M from the sheet feeding tray 11 to the image recorder 20. The medium feeder 12 includes an endless belt supported from the inner side by two rollers. The medium feeder 12 rotates the rollers to convey the recording medium M on the belt from the sheet feeding tray 11 to the image recorder 20.

The image recorder 20 includes a conveyer 21 (moving means), a handover unit 22, a heater 23, head units 24 (recording means), a fixer 25, an imaging unit 26 (imaging means), a deliverer 27 and the like.

The conveyer 21 holds the recording medium M on the conveyance surface (outer peripheral surface) of a cylindrical conveyance drum 211. By rotating the conveyance drum 211 about a rotation axis (cylinder axis) extending in an X direction (width direction, predetermined direction) perpendicular to the sheet of FIG. 1, the conveyer 21 conveys the conveyance drum 211 and the recording medium M on the conveyance drum 211 in a conveyance direction. The conveyance drum 211 includes a hook and an air sucker (not illustrated) for holding the recording medium M on the conveyance surface. The recording medium M is held on the conveyance surface by the hook pressing the ends and the air sucker suctioning the recording medium on the conveyance surface. The conveyer 21 includes a conveyance drum motor (not illustrated) for rotating the conveyance drum 211, and the conveyance drum 211 is rotated by an angle proportional to the amount of rotation of the conveyance drum motor.

The handover unit 22 transfers the recording medium M, which is conveyed from the medium feeder 12 of the sheet feeder 10, to the conveyer 21. The handover unit 22, which is disposed between the medium feeder 12 of the sheet feeder 10 and the conveyer 21, holds and picks up an end of the recording medium M conveyed from the medium feeder 12 with a swing arm 221 and hands over the recording medium M to the conveyer 21 via a transfer drum 222.

The heater 23, which is disposed between the position of the handover drum 222 and the position of the head units 24, heats the recording medium M conveyed from the conveyer 21 so that the temperature of the recording medium M falls within a predetermined temperature range. For example, the heater 23 includes an infrared heater or the like. The infrared heater generates heat when electricity is applied to the infrared heater based on a control signal from the controller 40.

The head units 24 record an image by performing a recording operation in which the head units 24 jet ink to the recording medium M through nozzle openings in an ink jetting surface opposed to the conveyance surface of the conveyance drum 211 at suitable timing in accordance with rotation of the conveyance drum 211 on which the recording medium M is held. The head units 24 are disposed so that the ink jetting surface is at a predetermined distance away from the conveyance surface. In the inkjet recording device 1 of the embodiment, four head units 24, which correspond respectively to four different color inks of yellow (Y), magenta (M), cyan (C) and black (K), are aligned at predetermined intervals in the order of Y, M, C and K from the upstream in the conveyance direction of the recording medium M.

FIG. 2 is a schematic view of a head unit 24, illustrating the configuration thereof. FIG. 2 is a plan view of the entire head unit 24 illustrating a side opposed to the conveyance surface of the conveyance drum 211.

In the embodiment, the head unit 24 includes 16 recording heads 242 in each of which a plurality of recording elements for jetting ink are arrayed in the X direction. Each of the recording elements includes a pressure chamber (channel) that stores ink, a piezoelectric element disposed on a wall of the pressure chamber, an electrode for applying voltage to the piezoelectric element to generate an electric field, and a nozzle 243 that is in communication with the pressure chamber and that jets ink stored in the pressure chamber. When a voltage signal having a drive waveform for deforming the piezoelectric element is applied to the electrode of the recording element, the pressure chamber is deformed according to the electric signal so that the pressure in the pressure chamber is changed. According to the pressure change, the ink is jetted from the nozzle 243 that is in communication with the pressure chamber. The amount of ink to be jetted from the nozzle 243 depends on the opening area of the nozzle 243 and the drive signal. In the embodiment, the amount of ink to be jetted from the nozzle 243 is selected so that the width of the ink landed on the recording medium M (ink droplet width) becomes approximately 50 µm. Accordingly, by repeatedly jetting ink from a single nozzle 243 while conveying the recording medium M, it is possible to form a line with a width in the X direction of approximately 50 µm. FIG. 2 illustrates the position of ink jetting openings of the nozzles 243, which are components of the ink recording elements.

The array direction of the recording elements in each of the recording heads 242 is not limited to the direction perpendicular to the conveyance direction but may be at a certain angle other than a right angle with respect to the conveyance direction.

In the head unit 24, the 16 recording heads 242 are paired to form eight head modules 242M each of which is composed of a pair of recording heads 242. In each of the head modules 242M, two recording heads 242 are disposed in such a positional relationship that positions the nozzles 243 of the recording elements of the two recording heads 242 alternately in the X direction. This arrangement of the recording elements allows each of the head modules 242M to record at a resolution in the width direction of 1200 dpi (dot per inch). Further, in the inkjet recording device 1, the ink jetting timing according to rotation of the conveyance drum 211 is selected so that the recording resolution in the conveyance direction becomes 1200 dpi.

The eight head modules 242M are arranged in a positional relationship in which the respective arrangements of the recording elements cover different areas in the X direction, and the recording elements of the eight head modules 242 as a whole are arranged over a predetermined recording width in the X direction. Further, the eight head modules 242M are arranged in a staggered pattern such that the arrangements of the recording elements partly overlap each other in the X direction. The eight head modules 242M thus arranged constitute a line head.

The arrangement in the X direction of the recording elements of the head unit 24 covers a width (recordable width) in the X direction of an image-recordable area of the recording medium M conveyed from the conveyer 21. When recording an image, the head unit 24 is used in a fixed position, and ink is successively jetted at different locations in the conveyance direction at predetermined intervals (conveyance direction intervals) as the recording medium M is being conveyed. The head unit 24 thus records an image by a single-path method.

The head unit 24 is not limited to the above-described configuration. For example, not the head modules 242M but the recording heads 242 may be arrayed in a staggered pattern, or the head unit 24 may include a single recording head 242.

The recording heads 242 sometimes have a defective nozzle having an ink jetting defect, which is caused by processing variation in forming the nozzles, variation of the characteristics of the piezoelectric elements, clogging of the nozzles 243, occlusion by foreign matter that is attached to the openings of the nozzles 243 or the like. Types of ink jetting defects include abnormality in the amount of ink to be jetted, abnormality in the landing position of ink on the recording medium M (i.e. abnormality in the ink jetting direction), and abnormality in the jetting speed of ink. When the head unit 24 with a defective nozzle is used for a recording operation, the defective nozzle does not jet ink normally. This leads to the degraded image quality of an image to be recorded on the recording medium M. The method of detecting a jetting defect of the nozzles 243 and the method of adjusting the operation of jetting ink from the recording elements of the head unit 24 when a jetting defect is detected will be described later.

The ink to be jetted from the nozzles 243 of the recording elements has properties of changing the phase between gel and sol depending on temperature and curing when irradiated with an energy ray such as an ultraviolet ray.

In the embodiment, the ink is sol at ordinary temperature and changes to sol when heated. The head unit 24 includes an ink heater (not illustrated) that heats ink stored in the head unit 24, and the ink heater works under the control of the controller 40 to heat the ink to a temperature at which the ink is sol. The recording head 242 jets the heated sol ink. When the sol ink is jetted onto the recording medium M, the ink droplets are allowed to cool to rapidly turn into gel after landing on the recording medium M and thus solidify on the recording medium M.

The fixer 25 includes an energy ray irradiator disposed over the width of the conveyer 21 in the X direction. By irradiating the recording medium M on the conveyer 21 with an energy ray such as an ultraviolet ray from the energy ray irradiator, the fixer 25 cures and fixes the ink jetted on the recording medium M. Between the position of the head unit 24 and the position of a handover drum 271 of the deliverer 27 with regard to the conveyance direction, the energy ray irradiator of the fixer 25 is opposed to the conveyance surface.

Between the ink fixing position of the fixer 25 and the position of the handover drum 271 with respect to the conveyance direction, the imaging unit 26 is disposed in a position that allows capturing an image of the surface of the recording medium M on the conveyance surface of the conveyance drum 211. The imaging unit 26 includes a line sensor 265 with a plurality of imaging elements arrayed in the X direction (FIG. 3). The imaging unit 26 obtains one-dimensional captured image data, which is composed of imaging pixel data (including RGB pixel values of individual imaging pixels) of imaging pixels that are one-dimensionally arrayed in the X direction in an imaging area covering the above-described recordable width. The imaging unit 26 outputs the obtained captured image data to the controller 40. The imaging unit 26 of the embodiment is capable of capturing an image at a resolution in the X direction of 560 dpi, and the imaging pixels are arranged at a pitch (pixel arrangement pitch) in the X direction of approximately 42.3 µm. Alternatively, a plurality of line sensors 265 may be arrayed in a staggered pattern so that the imaging pixels can be read individually in the width direction over the recordable width as a whole.

The deliverer 27 includes a belt loop 272 with an endless belt supported from the inner side by two rollers, and the handover drum 271 that hands over the recording medium M from the conveyer 21 to the belt loop 272. When the recording medium M is handed over from the conveyer 21 onto the belt loop 272 by the handover drum 271, the belt loop 272 conveys and sends the recording medium M to the sheet ejector 30.

The sheet ejector 30 includes a plate-shaped sheet ejection tray 31 on which the recording medium M sent from the image recorder 20 by the deliverer 27 is placed.

FIG. 3 is a block diagram of the inkjet recording device 1, illustrating the main functional configuration thereof.

The inkjet recording device 1 includes the heater 23, the head unit 24 with a head controller 241 and a head driver 2421, the fixer 25, the imaging unit 26 with an imaging controller 266 and the line sensor 265, the controller 40 (recording controlling means, detecting means), a conveyance driver 51, an operation display 52, an input/output interface 53, a bus 54 and the like. The imaging unit 26 and the controller 40 together constitute an image detection device.

The head controller 241 outputs a variety of control signals and image data to the head driver 2421 of the head modules 242M at suitable timing based on a control signal of the controller 40. Such control signals include a signal that indicates the drive waveform of a drive signal to be supplied from the head driver 2421 to the recording elements.

The head driver 2421 supplies the drive signal with the drive waveform to the electrodes of the recording elements of the recording head 242 according to the control signal and image data from the head controller 241 so as to jet ink from the openings of the nozzles 243 of the recording elements.

Based on a control signal of the controller 40, the imaging controller 266 captures an image of the image on the recording medium M by using the line sensor 265. Further, the imaging controller 266 performs processing such as current-voltage conversion, amplification, noise removal and analog-digital conversion on signals output from the line sensor 265 as a result of the image capture, and outputs the processed signals to the controller 40 as one-dimensional captured image data representing brightness values of the read image.

The controller 40 includes a CPU 41 (Central Processing Unit), a RAM 42 (Random Access Memory), a ROM 43 (Read Only Memory) and a storage 44.

The CPU 41 reads a variety of control programs and setting data stored in the ROM 43, stores them in the RAM 42 and performs a variety of computation processing by executing the programs. Further, the CPU 41 integrally controls the overall operation of the inkjet recording device 1.

The RAM 42 provides a working memory space for the CPU 41 and stores temporal data. The RAM 42 may include a non-volatile memory.

The ROM 43 stores a variety of controlling programs to be executed by the CPU 41, the setting data and the like. Instead of the ROM 43, a rewritable non-volatile memory such as an EEPROM (Electrically Erasable Programmable Read Only Memory) or a flash memory may be used.

In the storage 44, a print job (image recording command) input from an external device 2 through the input/output interface 53, image data relating to the print job, image data on a test image, captured image data generated by the imaging unit 26 and the like are stored. As the storage 44, for example, an HDD (Hard Disk Drive) is used. A DRAM (Dynamic Random Access Memory) or the like may be used in combination.

The conveyance driver 51 supplies a drive signal to a conveyance drum motor of the conveyance drum 211 based on a control signal of the controller 40 so as to rotate the conveyance drum 211 at a predetermined speed and timing. Further, the conveyance driver 51 supplies a drive signal to a motor for driving the medium feeder 12, the handover unit 22 and the deliverer 27 based on a control signal of the controller 40 so as to feed or eject the recording medium M to or from the conveyer 21.

The operation display 52 includes a display device such as a liquid crystal display or an organic EL display, and an input device such as operation keys or a touch panel overlaid on a screen of the display device. The operation display 52 displays a variety of information on the display device. Further, the operation display 52 converts a user input on the input device to an operation signal and outputs the operation signal to the controller 40.

The input/output interface 53 mediates data communication between the external device 2 and the controller 40. For example, the input/output interface 53 is composed of any one or combination of a variety of serial interfaces and a variety of parallel interfaces.

The bus 54 is a pathway for communication of signals between the controller 40 and the other components.

The external device 2, which is constituted by a personal computer for example, supplies a print job, image data and the like to the controller 40 though the input/output interface 53.

Next, the configuration and operation of the imaging unit 26 will be described in detail.

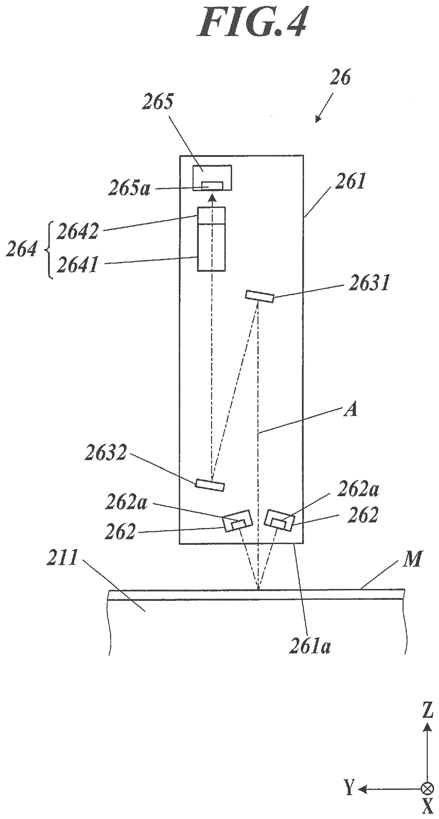

FIG. 4 is a schematic cross-sectional view of the imaging unit 26, illustrating the configuration thereof. FIG. 4 schematically illustrates the configuration of the imaging unit 26 in a cross section perpendicular to the X direction.

The imaging unit 26 includes a case 261, and a pair of light sources 262, mirrors 2631, 2632, an optical element 264 and a line sensor 265 that are housed in the case 261.

The case 261 is a rectangular box member with one of the faces opposed to the conveyance surface 211a. The face of the case 261 opposed to the conveyance surface 211a serves as a light incident surface 261a that has a transmission window made of a light permeable material such as glass. In the following description, the conveyance direction of the recording medium M when the recording medium M is opposed to the light incident surface 261a is referred to as a Y direction, and the direction perpendicular to the X-Y plane is referred to as a Z direction.

Each of the pair of light sources 262 is constituted by a linear light source with a plurality of LEDs 262a (Light Emitting Diodes) arrayed in an area covering the image recordable area of the head units 24 in the X direction. The pair of light sources 262 is disposed mutually symmetrically about a predetermined reference surface A that is perpendicular to the Y direction. The pair of light sources 262 emits light toward the recording medium M on the conveyance surface 211a through the transmission window of the light incident surface 261a.

The mirror 2631 has such a length in the X direction that corresponds to the arrangement of the light sources 262. In incident light that has been emitted from the light sources 262 and reflected on the recording medium M, the part that travels along the reference surface A is reflected toward the mirror 2632 by the mirror 2631. The mirror 2632, which is disposed closer to the light incident surface 26 a than the mirror 2631, reflects the light that has been reflected on the mirror 2631 toward the optical element 264. By the mirrors 2631, 2632 disposed as described above, a suitable optical path length is secured in the case 261.

The optical element 264 includes a lens optical portion 2641 that reduces and focuses the incident light from the mirror 2632 at the imaging elements 265a of the line sensor 265, and an optical low path filter 2642 (OLPF) that is disposed on the light exit side of the lens optical portion 2641 to separate (diffuse) the incident light from the lens optical portion 2641 in the X direction so as to emit the separated light. The OLPF 2642 may be detachably disposed so that the OLPF 2642 can be detached when it is not necessary to reduce the resolution in the X direction of an image to be captured.

The line sensor 265 outputs a one-dimensional image by using the plurality of imaging elements 265a that is arrayed in the X direction to individually output signals according to the intensity of incident light. Each of the imaging elements 265a includes three sub-imaging elements that output signals according to the intensity of wavelength components of R (Red), G (Green) and B (Blue) respectively. The three sub-imaging elements of the imaging elements 265a are arrayed in the Y direction. Accordingly, the sub-imaging elements of the same color of the plurality of imaging elements 265a are arrayed in the X direction. The arrangement of the sub-imaging elements of each imaging element 265a is not limited to this. The R, G and B sub-imaging elements may be arrayed in the X direction or in a Bayer pattern composed of two rows in the Y direction. As the sub-imaging elements for R, G and B, for example, CCD (Charge Coupled Device) sensors or CMOS (Complementary Metal Oxide Semiconductor) sensors with color filters can be used. The color filters are disposed at light receiving portions of the sensors to pass a wavelength component of R, G or B. Alternatively, each of the imaging elements 265a may be composed of a single sub-scanning element to capture a single color image.

The signals output from the line sensor 265 are subjected to current-voltage conversion, amplification, noise removal, analog-digital conversion and the like at an analog front end (not illustrated) and then output to the controller 40 as captured image data representing the brightness values of a read image.

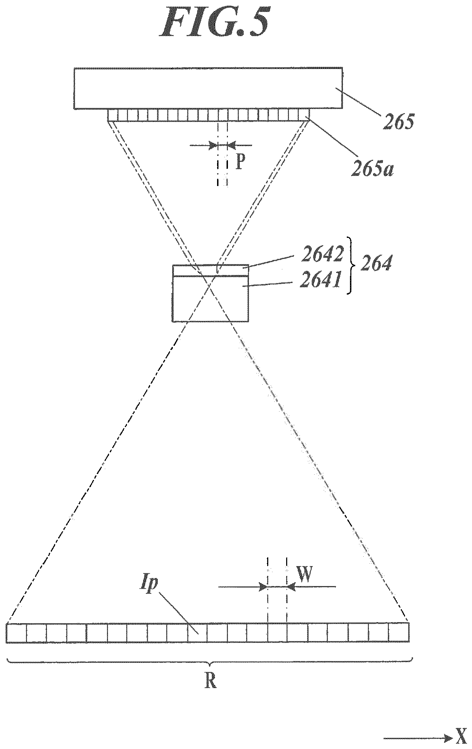

FIG. 5 illustrates the relationship between the imaging area R of the imaging unit 26 and the arrangement of the imaging elements 265a.

FIG. 5 illustrates the imaging area R on the recording medium M to be captured by the plurality of imaging elements 265a (i.e. the area on the recording medium M from which incident light is guided to the plurality of imaging elements 265a by the optical elements 264). In the imaging area R, imaging pixels Ip are illustrated which are targets to be captured by the individual imaging elements 265a. In the following description, the arrangement pitch in the X direction of the one-dimensionally arrayed imaging pixels Ip is referred to as a pixel arrangement pitch W, and the arrangement pitch in the X direction of the imaging elements 265a is referred to as an element arrangement pitch P. In FIG. 5, the number of imaging elements 265a and the number of imaging pixels Ip are reduced for descriptive reasons.

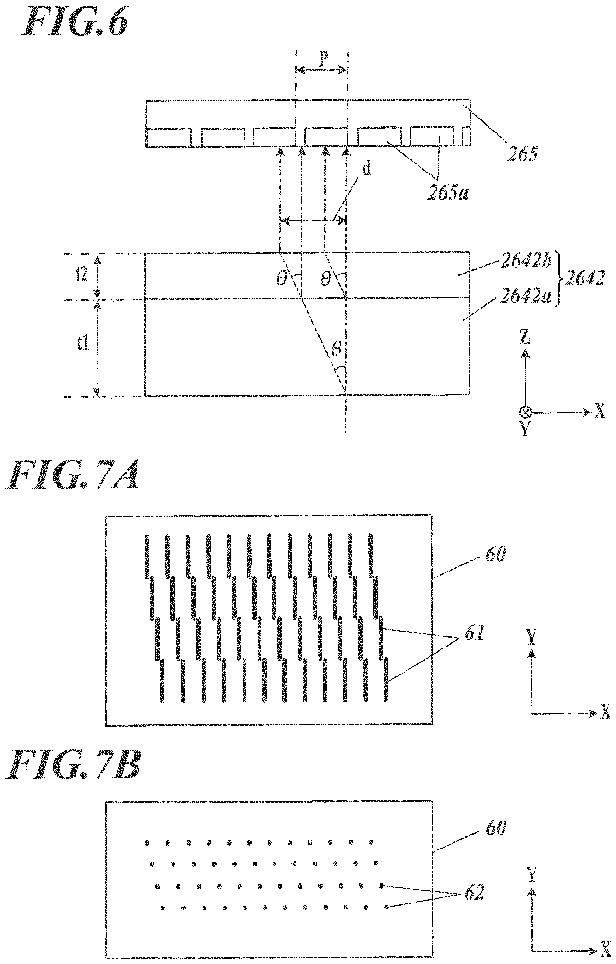

FIG. 6 illustrates the configuration of the OLPF 2642.

As the OLPF 2642, quartz plates are used in the embodiment. However, the OLPF 2642 is not particularly limited. The OLPF 2642 is composed of two quartz plates 2642a, 2642b with different thickness that are laminated and bonded together, and if necessary, a polarizer intervened therebetween. The number of quartz plates is not limited to two and may be one, three or more.

The quartz plates doubly refract incident light to separate the incident light into ordinary light (normal light) and extraordinary light with a predetermined angular difference θ. As a result, the outgoing ordinary light and extraordinary light, which have been entered through the same incident point and then separated from each other, exit from the OLPF 2642 at different points at a distance (t·tanθ) from each other that depends on the thickness t of the quartz plate. The separation width between the outgoing points of the ordinary light and the extraordinary light corresponds to the cutoff frequency (spatial period) relating to degradation of the resolution of a captured image, and the spatial structure (high-frequency component) at a frequency higher than the cutoff frequency is removed from the spatial distribution in the separating direction of the incident light.

As illustrated in FIG. 6, the two quartz plates 2642a, 2642b individually separate the extraordinary light from the ordinary light in the width direction. Accordingly, the outgoing points of the extraordinary lights are deviated from the outgoing points of the respective ordinary lights by distances t1·tan(θ) and t2·tan(θ) according to the thicknesses t1, t2. Accordingly, the incident light is separated in the X direction to the separation width d before entering the imaging elements 265a.

In contrast, the incident light to the OLPF 2642 is not separated in the Y direction. Accordingly, the incident light through a single incident point exits from a single point in the Y direction.

In the embodiment, the thickness t1 of the quartz plate 2642a and the thickness t2 of the quartz plate 2642b are selected so that the separation width d in the X direction of the OLPF 2642 is greater than the element arrangement pitch P of the imaging elements 265a. In this configuration, a spatial frequency component that is equal to or higher than 1/2 (Nyquist frequency) of the sampling spatial frequency of the imaging elements 265a is removed from incident light. Therefore, the frequency component that is equal to or higher than the Nyquist frequency is detected as aliasing distortion. This can prevent the occurrence of a low-frequency pseudo signal (moire) in detection values of the imaging pixels. In particular, by doubling quartz plates with different thickness as in the embodiment, it becomes possible to output and detect an image in which the spatial frequency component of equal to or greater than the Nyquist frequency is reduced more certainly. When the OLPF 2642 is composed of a single quartz plate, the thickness of the quartz plate may be selected so that the quartz plate can separate the incident light to the separation width d.

Further, the OLPF 2642 of the embodiment separates the incident light such that the incident light emitted from a predetermined width L in the X direction on the surface of the recording medium M, which is equal to or less than twice the pixel arrangement pitch W, is guided to an area on the plurality of imaging elements 265a that is greater than twice the element arrangement pitch P in the X direction. In the other word, the thickness t1, t2 of the quartz plates 2642a, 2642b is selected so that the incident light emitted from the predetermined width L is guided to an area of greater than twice the element arrangement pitch P. The predetermined width L is a width (ink droplet width) that corresponds to the size (width in the X direction) of a single ink droplet that is jetted from a nozzle 243 of a head unit 24 and landed on the recording medium M. In the embodiment, the predetermined width L is approximately 50 µm. This configuration increases the number of imaging elements 265a to be used in detecting a detection target image recorded by using the head unit 24, which makes it possible to detect the position in the X direction of the detection target image with high precision. This will be described later in detail.

When the amount of incident light is spatially diffused by the OLPF 2642, the peak value of brightness values to be detected by the imaging elements in the image capture is decreased. To avoid this, the light intensity of the light sources 262 may be increased, or the incident light detection time of the imaging elements 265a may be extended.

Next, a method of detecting a defective nozzle of the inkjet recording device 1 according to the embodiment will be described.

In the inkjet recording device 1 of the embodiment, a defective nozzle detecting operation is performed at the time of manufacture, at the time of changing the head unit 24 and at predetermined timing (e.g. every time a predetermined number of images are recorded). In the defective nozzle detecting operation, a predetermined test image to be used for detecting a defective nozzle is recorded on the recording medium M in response to a user input on the operation display 52 or the controller 40 determining that the predetermined timing has come. The test image recorded on the recording medium M is captured by the imaging unit 26, and a defective nozzle is detected based on the captured image data. When a defective nozzle is detected, an adjustment is made on the operation of jetting ink from the nozzles 243 of the head unit 24.

FIG. 7A and FIG. 7B illustrate examples of the test image 60.

To detect abnormalities in the ink landing position (jetting direction) in the X direction of the nozzles 243 or abnormalities in the ink jetting amount, for example, the test image 60 is recorded which has a plurality of lines 61 (detection target images) extending in the Y direction as illustrated in FIG. 7A. The lines 61 of the test image 60 of FIG. 7A are recorded by jetting ink from every third nozzles 243 onto the recording medium M conveyed in the Y direction at constant jetting intervals. Since each of the lines 61 is formed by ink that is jetted from a single nozzle 243, it is possible to detect abnormalities in the ink jetting direction of the nozzle 243 by detecting the position of the line 61 in the X direction based on the image capture result of the test image 60. Further, it is possible to detect abnormalities in the amount of ink jetted from the nozzles 243 based on the density of the lines 61 (brightness value in the captured image data, hereinafter also referred to as line density of the lines 61). Further, it is possible to specify a nozzle 243 responsible for a lost line 61 as a defective nozzle (failure nozzle) that does not jet ink.

By using the test image 60 as illustrated in FIG. 7B including a plurality of dots 62 (detection target images) recorded by the individual nozzles 243, it is further possible to detect abnormalities in the ink landing position in the Y direction (abnormalities in the jetting direction and the jetting speed) of the nozzles 243.

These head adjustment charts are formed for the colors of C, M, Y and K, preferably individually for each color.

When a defective nozzle is detected that does not jet ink or that has an abnormality in the ink landing position in the X direction, the ink jetting operation from the nozzles 243 of the head units 24 is adjusted to stop jetting ink from the defective nozzle and to increase the amount of ink to be jetted from nozzles 243 around the defective nozzle so as to compensate for the lack of ink that should be jetted from the defective nozzle. In this regard, if it is possible to detect the position in the X direction of the lines 61 or the dots 62 with high precision, it is possible to accurately specify a nozzle 243 with a slightly deviated jetting direction. Then, it becomes possible to improve the image recording quality by specifying such a nozzle 243 as a defective nozzle and performing the above-described compensation or to continuously monitor such a nozzle to detect whether the nozzle 243 recovers to a normal condition or the defect gets more serious.

When a defective nozzle is detected that has an abnormality in the ink landing position in the Y direction, it is possible to correct the ink landing position by changing the setting and thereby adjusting the ink jetting timing.

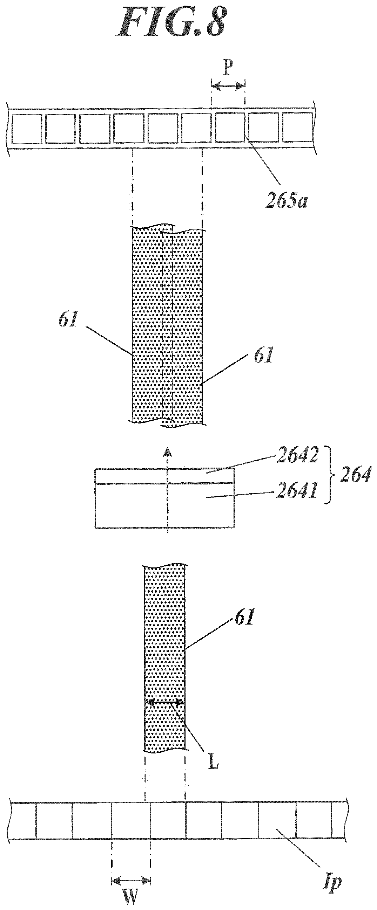

FIG. 8 illustrates an operation of the imaging unit 26 capturing a line 61 of the test image 60.

When the imaging unit 26 captures an image of a line 61 as illustrated in the lower part of FIG. 8, the imaging unit 26 captures an area covering the both edges in the X direction of the target line 61. The lines 61 to be recorded by the head unit 24 of the embodiment have a width L in the X direction that is greater than the pixel arrangement pitch W of the imaging pixels Ip and that is equal to or less than twice the pixel arrangement pitch W. As described above, in the embodiment, the pixel arrangement pitch W is approximately 42.3 µm, and the width L is approximately 50 µm. If the incident light is not separated by the OLPF 2642, the line 61 would be captured by adjacent two imaging elements 265a. In this case, the one-dimensional captured image data on the test image 60, which is obtained by the line sensor 265, reflects the detection values of the line density of the line 61 in two imaging pixels Ip. While it is possible to detect the representative position (center of gravity or center) in the X direction of the line 61 by proportionally distributing the detection values of the imaging pixels Ip, such detection methods suffer from a large error that is caused by variation in sensitivity of the imaging elements 265a or variation in edge position of the line 61.

To cope with the problem, the imaging unit 26 of the embodiment is configured such that incident light emitted from the width L in the X direction is separated and guided by the OLPF 2642 to an area that is greater than twice the element arrangement pitch P in the X direction of the plurality of imaging elements 265a as illustrated in FIG. 8. As a result, the line 61 is captured by adjacent three or more imaging elements 265a, and the one-dimensional captured image data on the test image 60 obtained by the line sensor 265 reflects the detection values of the line density of the line 61 in three or more imaging pixels Ip. By using the detection values of three or more imaging pixels Ip, it is possible to detect the representative position of the line 61 with high precision.

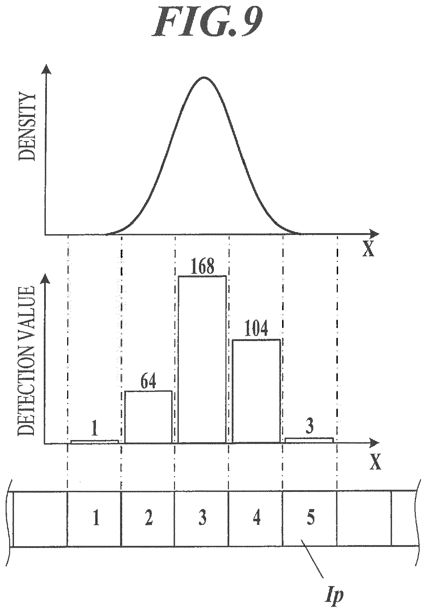

FIG. 9 illustrates an example of detection values in imaging pixels Ip when a line 61 is captured by three or more imaging elements 265a.

In FIG. 9, the density distribution in the X direction of the line 61 is illustrated in the topmost part. In the example illustrated in FIG. 9, the incident light emitted from the line 61 is separated to an area of five imaging elements 265a before entering the line sensor 265, and the line 61 is therefore captured by the five imaging elements 265a. In the middle part of FIG. 9, the distribution of the detection values of the five imaging pixels Ip thus obtained is illustrated.

The center of gravity in the X direction of the line 61 can be determined from a weighted average using the detection values of the imaging pixels Ip in FIG. 9. That is, assuming that the position of the five imaging pixels Ip relating to the image capture result of the line 61 is referred to respectively as 1 to 5 from left to right, the center of gravity of the line 61 can be calculated as (1×1+2×64+3×168+4×104+5×3)/(1+64+168+104+3) = 3.11.

However, the method of calculating the center of gravity is not limited thereto. For example, an approximation curve representing the distribution of detection values with respect to the position in the X direction may be determined, and the peak position of the approximation curve may be determined as the center of gravity.

As described above, the imaging unit 26 of the embodiment separates incident light in the X direction by using the OLPF 2642 of the optical element 264 in order to detect the respective centers of gravity of the lines 61 or the dots 62 with high precision. The precision of detecting a center of gravity is improved according to the separation width (i.e. improved more as the cutoff frequency of the OLPF 2642 is decreased). However, when the separation width is too large, the SN ratio in detection by the imaging elements 265a is deteriorated, which leads to the decreased detection precision. Further, the spatial frequency characteristics of incident light on the imaging elements 265a are affected by both the MTF (Modulated Transfer Function) of the lens optical portion 2641 and the MTF of the OLPF 2642. An MTF is a function that represents the response characteristics of an optical system with respect to the spatial frequency. When the detection target image to be captured has a limited length in the Y direction such as the dots 62, the SN ratio in detection by the imaging elements 265a is also deteriorated according to the degree of separation (blur) in the Y direction of the optical elements 264.

In consideration of all the above-described matters, the characteristics required for the optical element 264 are specified as follows in the embodiment. That is, the characteristics of the optical element 264 are specified by geometric mean MTF = {(MTFx)^2+(MTFy)^2}^0.5, where MTFx and MTFy are respectively the MTFs in the X and Y directions of the optical component composed of the lens optical portion 2641 and the OLPF 2642 at a predetermined spatial frequency (e.g. 1/2 of the Nyquist frequency) that is lower than the Nyquist frequency of the sampling spatial frequency of the imaging elements 265a. In the embodiment, the combination of the lens optical portion 2641 and the OLPF 2642 is selected to have a geometric mean MTF as described above of equal to or greater than a predetermined value (20% in the embodiment).

Subsequently, the control steps of defective nozzle detection processing and image recordation processing performed by the controller 40 of the inkjet recording device 1 will be described.

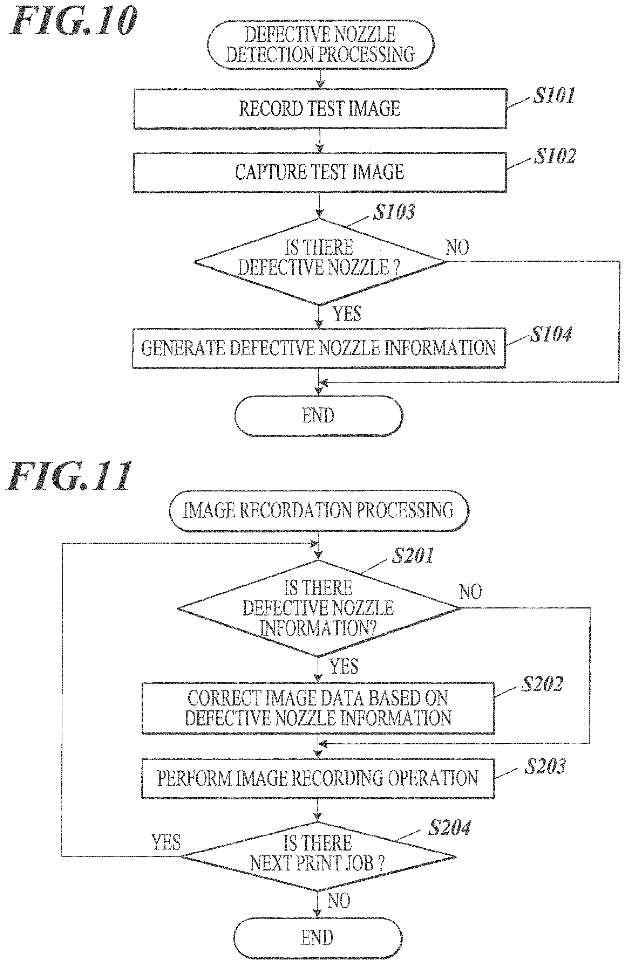

FIG. 10 is a flowchart illustrating the control steps of the defective nozzle detection processing performed by the controller 40.

Prior to starting the defective nozzle detection processing, the controller 40 forces the conveyance driver 51 to output a drive signal to the conveyance drum motor of the conveyance drum 211 so as to start rotation of the conveyance drum 211.

When the defective nozzle detection processing is started, the controller 40 forces the head unit 24 to record the test image 60 on the recording medium M (Step S101). That is, the controller 40 outputs a control signal to the conveyance driver 51 to operate the sheet feeder 10, the handover unit 22 and the conveyer 21 so as to mount the recording medium M on the conveyance surface of the conveyance drum 211. Further, the controller 40 forces the head controller 241 to supply image data on the test image 60 stored in the storage 44 and a control signal to the head driver 2421 at suitable timing corresponding to rotation of the conveyance drum 211, so as to jet ink from the recording elements of the recording heads 242 to record the test image 60 including the lines 61 on the recording medium M.

Further, when the recording medium M with the ink is moved to the fixer 25, the controller 40 forces the fixer 25 to irradiate the ink with a predetermined energy ray so as to fix the ink to the recording medium M.

The controller 40 forces the imaging unit 26 to capture an image of the test image 60 on the recording medium M (Step S102). That is, when the test image 60 on the recording medium M is moved to the imaging position of the imaging unit 26 according to rotation of the conveyance drum 211, the controller 40 outputs a control signal to the imaging controller 266 so as to force the imaging unit 26 to start capturing the test image 60. The imaging controller 266 obtains one-dimensional captured image data from the line sensor 265 repeatedly at predetermined time intervals. The imaging controller 266 thus generates captured image data of the test image 60 and stores the generated data in the storage 44.

Based on detection values of imaging pixels Ip in the captured image data, the controller 40 detects the center of gravity in the X direction of each line 61 by the above-described method (Step S103).

The controller 40 makes a determination as to whether there is a defective nozzle based on the position of a lost line 61 or the line density of the lines 61 (Step S104). In the embodiment, when a line 61 is misaligned in the X direction or lost, the controller 40 detects the nozzle 243 responsible for the line 61 as a defective nozzle.

If it is determined that there is a defective nozzle (Step S104, Yes), the controller 40 generates defective nozzle information that represents the serial number of the defective nozzle in the recording head 242, the type of ink jetting defect (no jetting of ink, abnormal ink jetting position in the X direction or the like) and the degree of the ink jetting defect (degree of landing position misalignment or the like). The controller 40 then stores the defective nozzle information in the storage 44 (Step S105).

After Step S105 is done, or if it is determined in Step S104 that there is no defective nozzle (Step S104, No), the controller 40 ends the defective nozzle detection processing.

FIG. 11 is a flowchart illustrating the control steps of the image recordation processing by the controller 40.

The image recordation processing is performed when a print job and image data are input to the controller 40 from an external device 2 through the input/output interface 53.

Prior to starting the image recordation processing, the CPU 41 forces the conveyance driver 51 to output a drive signal to the conveyance drum motor of the conveyance drum 211 so as to start rotation of the conveyance drum 211.

The controller 40 makes a determination as to whether the defective nozzle information is stored in the storage 44 (Step S201). If it is determined that the defective nozzle information is stored in the storage 44 (Step S201, Yes), the controller 40 corrects the image data for the print job based on the defective nozzle information (Step S202). That is, when a defective nozzle that does not jet ink or a defective nozzle that has an abnormality in the ink landing position in the X direction is specified in the defective nozzle information, the controller 40 stops jetting ink from the defective nozzle. Further, the controller 40 corrects the image data to increase the amount of ink to be jetted from recording elements around the defective nozzle so as to compensate for the lack of ink that should be jetted from the defective nozzle. The controller 40 stores the corrected image data in the storage 44.

After Step S202 is done, the controller 40 forces the head unit 24 to perform an image recoding operation for the print job based on the corrected image data (Step S203). That is, the controller 40 outputs a control signal to the conveyance driver 51 to operate the sheet feeder 10, the handover unit 22 and the conveyer 21 so as to mount the recording medium M on the conveyance surface of the conveyance drum 211. Further, the controller 40 forces the head controller 241 to supply the corrected image data stored in the storage 44 to the head driver 2421 at suitable timing corresponding to rotation of the conveyance drum 211, so as to force the head unit 24 to jet ink onto the recording medium M to record a target image on the recording medium M.

If it is determined in Step S 201 that no defective nozzle information is stored in the storage 44 (Step S201, No), the controller 40 performs Step S203 without correcting the image data.

The controller 40 makes a determination as to whether there is a next print job (Step S204). If there is a next print job (Step S204, Yes), the controller 40 proceeds to Step S201.

If it is determined that the image recoding operation for all print jobs is finished (Step S204, No), the controller 40 ends the image recordation processing.

As described above, the imaging device of the embodiment includes: the imaging unit 26 that detects the lines 61 as the detection target images and that captures the surface of the recording medium M with the lines 61 thereon one-dimensionally in the X direction; and a controller 40, in which the lines 61 are recorded on the recording medium M with ink droplets jetted from the nozzles 243 and landed on the recording medium M and, the lines 61 have a predetermined width L (ink droplet width) in the X direction corresponding to the size of a single ink droplet landed on the recording medium M. The controller 40 detects the position in the X direction of the lines 61 based on the image capture result by the imaging unit 26 of the areas over both edges in the X direction of the lines 61 (detecting means). The imaging unit 26 includes: the line sensor 265 that includes the plurality of imaging elements 265a arranged at the predetermined element arrangement pitch P in the X direction and that detects incident light emitted from the surface of the recording medium M by the plurality of imaging elements 265a so as to obtain detection values of the plurality of imaging elements Ip that is one-dimensionally arrayed on the recording medium M in the X direction corresponding to the plurality of imaging elements 265a; and the optical element 264 that guides incident light emitted from the surface of the recording medium M to the line sensor 265. The optical element 264 separates the incident light so as to guide the incident light emitted from the predetermined width L, which is equal to or less than twice the pixel arrangement pitch W in the X direction of the plurality of imaging pixels Ip, to an area that is greater than twice the element arrangement pitch P in the X direction of the plurality of imaging elements 265a. The controller 40 detects the position based on detection values of the imaging elements Ip corresponding to the imaging elements 265a to which the incident light emitted from the lines 61 is guided (detecting means).

With this configuration, it is possible to detect incident light emitted from a line 61, which is recorded on the recording medium M by jetting ink from a nozzle 243 and which has the predetermined width L in the X direction, at three or more imaging elements 265a. From the detection values of the imaging pixels Ip corresponding to the three or more imaging elements 265a, it is possible to detect the center of gravity in the X direction of the line 61 stably with high precision by calculating a weighted average or fitting to a high-dimensional function.

The optical element 264 separates incident light emitted from one point on the recording medium M into an area with a separation width in the X direction of greater than the element arrangement pitch P and guides the separated light to the line sensor 265. As a result, a spatial frequency component that is higher than 1/2 (Nyquist frequency) of the sampling spatial frequency of the imaging elements 265a is removed from the incident light. Therefore, it is possible to reduce the occurrence of moire that causes an error in detection values of the imaging pixels Ip. Since the variation of detection values due to moire is thus reduced, it is possible to correctly detect the line density of the lines 61, i.e. the amount of ink jetted from the nozzles 243, based on the image capture result of the lines 61. Therefore, it is possible to detect a defective nozzle having an abnormality in the amount of ink to be jetted based on the line density of the lines 61 that is detected from the image capture result of the lines 61.

The optical element 264 separates incident light only in the X direction. That is, with regard to the Y direction, the optical element 264 neither separates the incident light out of the detection area of the imaging elements 265a, which results in the decreased amount of light to be detected, nor defocuses the image. Since a decrease in the amount of light to be detected by the imaging elements 265a is caused only by the separation of incident light in the X direction, it is possible to curb the decrease in the SN ratio.

The optical element 264 includes the quartz plates 2642a, 2642b that serve as birefringent plates to doubly refract incident light in the X direction so as to separate the incident light into ordinary light and extraordinary light. With this configuration, it is possible to readily adjust the imaging resolution in the X direction by detaching or changing the quartz plates 2642a, 2642b without any complex focusing configuration of the lens optical portion 2641.

In the optical element 264, the quartz plates 2642a, 2642b having different separation width between ordinary light and extraordinary light in the X direction are laminated together. With this configuration, it is possible to separate incident light into a suitable separation width in the X direction so that the imaging unit 26 can capture an image at suitable resolution.

The inkjet recording device 1 of the embodiment includes the head unit 24 that jets ink droplets from the nozzles 243, the controller 40, and the above-described image detection device. The controller 40 forces the head unit 24 to jet ink from the nozzles 243 onto the recording medium M so as to record the lines 61 with the predetermined width L (ink droplet width) in the X direction that corresponds to the size of a single ink droplet landed on the recording medium M (recordation controlling means). With this configuration, it is possible to record the lines 61 and to detect the position of the lines 61 in the X direction in the inkjet recording device 1.

The inkjet recording device 1 includes the conveyer 21 that moves the recording medium M in the Y direction perpendicular to the X direction, and/or the head unit 24 and the imaging unit 26 relative to each other. The head units 24 includes the plurality of nozzles 243 disposed over the predetermined recording width in the X direction. The controller 40 records the lines 61 by jetting ink droplets from the plurality of nozzles 243 onto the recording medium M that is moved relative to the head unit 24 by the conveyer 21 (recordation controlling means). The imaging unit 26 captures the surface of the recording medium M that is moved relative to the imaging unit 26 by the conveyer 21. With this configuration, it is possible to record an image by the single-path method that involves recording the image by jetting ink from the head unit 24 fixed in the X direction. A detection target image such as a line 61, which is recorded by ink jetted from a single nozzle 243, is captured by specific (three or more) imaging elements 265a regardless of the position in the Y direction of the recording medium M. Therefore, it is possible detect the position in the X direction of the line 61 with high precision from detection values of the imaging pixels Ip obtained by the specific imaging elements 265a.

The present invention is not limited to the above-described embodiments, and a variety of changes can be made.

For example, the above-described embodiment is an example in which the imaging elements 265a of the line sensor 265 are arrayed in the X direction. Instead, the imaging elements 265a may be arrayed in a different arrangement with the element arrangement pitch P. For example, the imaging elements 265a may be arrayed in an arrangement that is inclined by an angle other than 90 degrees with respect to the X direction.

In the embodiment, quartz plates are used as the birefringent plates. However, the birefringent plates are not limited thereto, and other birefringent plates such as lithium niobate or calcite may be used instead.

The above-described embodiment illustrates an example in which quartz plates as the birefringent plates are used to separate incident light in the X direction. Instead, incident light may be diffused in the X direction by adjusting the focal position of the lens optical portion 2641 and thereby defocusing an image on the imaging elements 265a in the X direction.

The above-described embodiment illustrates an example in which the lines 61 with the predetermined width L in the X direction are formed by jetting ink from the nozzles 243. When the head unit 24 can record a detection target image (line 61 or dot 62) having a width in the X direction of less than the predetermined width L, the amount of ink to be jetted may be adjusted so that the width of the detection target image becomes equal to or greater than the width L. By doing so, it is possible to capture the detection target image by three or more imaging elements 265a and to detect the position in the X direction of the detection target image with high precision.

The above-described embodiment illustrates the single-path inkjet recording device 1 as an example. However, the present invention may be applied to an inkjet recording device that records an image by scanning a recording head.

While the present invention is described with some embodiments, the scope of the present invention is not limited to the above-described embodiment but encompasses the scope of the invention recited in the claims and the equivalent thereof.

### Industrial Applicability

The present invention is applicable to image detection devices and inkjet recording devices.

### Reference Signs List

- 1: Inkjet recording device
- 2: External device
- 10: Sheet feeder
- 11: Sheet feeding tray
- 12: Medium feeder
- 20: Image recorder
- 21: Conveyer
- 22: Handover unit
- 23: Heater
- 24: Head unit
- 25: Fixer
- 26: Imaging unit
- 27: Deliverer
- 30: Sheet ejector
- 31: Sheet ejection tray
- 40: Controller
- 41: CPU
- 42: RAM
- 43: ROM
- 44: Memory
- 51: Conveyer driver
- 52: Operation display
- 53: Input/output interface
- 54: Bus
- 60: Test image
- 61: Line
- 62: Dot
- 211: Conveyance drum
- 211a: Conveyance surface
- 241: Head controller
- 242: Recording head
- 2421: Head driver
- 242M: Head module
- 243: Nozzle
- 261: Case
- 261a: Light incident surface
- 262: Light source
- 2631, 2632: Mirrors
- 264: Optical element
- 265: Line sensor
- 265a: Imaging element
- 266: Imaging controller
- 2641: Lens optical portion
- 2642: Optical low-pass filter (OLPF)
- 2642a, 2642b: Quartz plate
- Ip: Imaging pixel
- L: Predetermined width
- M: Recording medium
- P: Element arrangement pitch
- R: Imaging area
- W: Pixel arrangement pitch

## Claims

1. An image detection device for detecting a detection target image that is recorded on a recording medium by an ink droplet jetted from a nozzle onto the recording medium and that has an ink droplet width in the predetermined direction corresponding to a size of a single ink droplet landed on the recording medium, comprising:
an imaging means that captures a surface of the recording medium one-dimensionally in the predetermined direction; and
a detecting means that detects a position in the predetermined direction of the detection target image based on an image capture result of an area over both edges in the predetermined direction of the detection target image obtained by the imaging means,
wherein the imaging means comprises:
a line sensor that comprises a plurality of imaging elements arranged at a predetermined element arrangement pitch in the predetermined direction and that detects incident light emitted from the surface of the recording medium with the plurality of imaging elements so as to obtain detection values of a plurality of imaging pixels one-dimensionally arrayed on the recording medium in the predetermined direction corresponding to the plurality of imaging elements; and
an optical element that guides the incident light emitted from the surface of the recording medium to the line sensor,
wherein the optical element diffuses the incident light such that incident light emitted from the ink droplet width of less than twice an arrangement pitch in the predetermined direction of the plurality of imaging pixels is guided to an area on the plurality of imaging elements of greater than twice the element arrangement pitch in the predetermined direction, and
wherein the detecting means detects the position based on detection values of the imaging pixels corresponding to the imaging elements to which the incident light emitted from the detection target image is guided.

2. The image detection device according to claim 1, wherein the optical element diffuses the incident light emitted from a point on the recording medium to a diffusion width in the predetermined direction of equal to or greater than the element arrangement pitch and guides the diffused light to the line sensor.

3. The image detection device according to claim 1 or 2, wherein the optical element diffuses the incident light only in the predetermined direction.

4. The image detection device according to any one of claims 1 to 3, wherein the optical element comprises a birefringent plate that doubly refracts the incident light in the predetermined direction to separate the incident light into ordinary light and extraordinary light.

5. The image detection device according to claim 4, wherein the birefringent plate comprises a plurality of birefringent plates with different separation width in the predetermined direction between the ordinary light and the extraordinary light, and the plurality of birefringent plates is laminated together.

6. An inkjet recording device, comprising:
a recording means that jets the ink droplet from the nozzle;
a recordation controlling means that forces the recording means to jet ink from the nozzle onto the recording medium to record a recordation target image on the recording medium having the ink droplet width in the predetermined direction corresponding to the size of a single ink droplet landed on the recording medium; and
the image detection device according to any one of claims 1 to 5.

7. The inkjet recording device according to claim 6, further comprising:
a moving means that moves the recording medium, and/or the recording means and the imaging means relative to each other in a direction perpendicular to the predetermined direction,
wherein the recording means comprises a plurality of the nozzle that is disposed over a predetermined recording width in the predetermined direction,
wherein the recordation controlling means records the detection target image by jetting ink droplets from a plurality of the nozzle onto the recording medium that is moved relative to the recording means by the moving means, and
wherein the imaging means captures the surface of the recording medium that is moved relative to the imaging means by the moving means.
